# EUROPÄISCHE PATENTSCHRIFT

(11) **EP 1 308 803 B1**
(45) Veröffentlichungstag und Bekanntmachung des Hinweises auf die Patenterteilung: **11.10.2006**
(21) Anmeldenummer: 01126076.7
(22) Anmeldetag: 02.11.2001
(51) Int. Cl.: G05B 19/042

(54) **Diagnosefähiges Netzgerät**
Power supply diagnostic system
Système de diagnostic d'alimentation

(43) Veröffentlichungstag der Anmeldung: 07.05.2003
(73) Patentinhaber: Murrelektronik GmbH, 71570 Oppenweiler (DE)
(72) Erfinder: Bauermeister, Ralf, 71332 Waiblingen (DE); Gutekunst, Jürgen, 72622 Nürtingen (DE)
(74) Vertreter: Wasmuth, Rolf

(56) Entgegenhaltungen:
- EP-A- 0 498 645
- DE-U- 29 714 101
- US-A- 4 510 547

## Beschreibung

Die Erfindung betrifft ein Netzgerät zur Leistungsversorgung einer Vielzahl von elektrischen Verbrauchern, insbesondere einer Maschinensteuerung, mit Sensoren und Aktoren nach dem Oberbegriff des Anspruchs 1.

Netzgeräte zur Spannungsversorgung von Verbrauchern sind allgemein bekannt. In Maschinensteuerungen werden Sensoren, Aktoren oder dgl. Elemente mit einer Betriebsspannung von z. B. 24 V Gleichspannung versorgt. In diesem Niedervoltbereich arbeiten Aktoren, Sensoren oder dgl. Elemente der Maschinensteuerung, die z. B. über einen Datenbus an eine Zentraleinheit der Maschinensteuerung angeschlossen sind, wie in der DE 297 14 101 U1 beschrieben.

Die den Niedervoltbereich versorgenden Netzgeräte sind mit einer üblichen Schutzschaltung gegen Überstrom (Kurzschluß) abgesichert, wobei im Kurzschlußfall der Ausgang und damit alle an dem Netzgerät angeschlossenen Elemente stromlos geschaltet werden. Dies führt dazu, daß z. B. bei einem Kurzschluß in einem Sensor nicht nur weitere Sensoren, sondern auch Aktoren augeschaltet werden, was zu undefinierten Betriebszuständen in der Maschinenanlage führen kann.

Da die verwendeten Netzgeräte eine Maximalleistung von z. B. 2 Ampere aufweisen, können immer nur eine bestimmte Anzahl von Sensoren, Aktoren oder dgl. Elemente von einem Netzgerät versorgt werden. Für eine gesamte Maschinensteuerung sind daher eine Vielzahl von Netzgeräten für den Niederspannungsbereich notwendig.

Die US 4,510,547 beschreibt ein Netzgerät für einen Kompressor, in dessen elektrischer Schaltung eine Kurzschlußsicherung integriert ist, die den einzigen Ausgangskreis im Kurzschlußfall abschaltet.

Der Erfindung liegt die Aufgabe zugrunde, ein Netzgerät für eine Maschinensteuerung bereitzustellen, welches eine intelligente Überwachung des Ausgangskreises ermöglicht.

Die Aufgabe wird erfindungsgemäß nach den kennzeichnenden Merkmalen des Anspruchs 1 gelöst.

Über eine Sensoreinrichtung wird zumindest eine Betriebsvariable des Ausgangskreises abgegriffen, wobei die Sensoreinrichtung - zweckmäßig verstärkt über einen Verstärker - das Ausgangssignal an eine Steuer- und Überwachungseinrichtung meldet. Diese verarbeitet die erhaltenen Signale der Betriebsvariablen nach dem Ist-Zustand und/oder nach einer Trendanalyse, um bestehende wie zu erwartende unzulässige Betriebszustände im Ausgangskreis festzustellen, anzuzeigen und nur den eine unzulässige Betriebsvariable aufweisenden Ausgangskreis abzuschalten.

Diese Gestaltung der Steuer- und Überwachungseinrichtung hat den Vorteil, daß sowohl im Kurzschlußstromfall in den Ausgangskreis eingegriffen werden kann, als auch ein schleichend anwachsender Strom erkannt und eine Vorausfallanzeige generiert werden, die das baldige Abschalten des Ausgangskreises anzeigt. Der Benutzer kann somit auch vor einem zu erwartenden Störfall mit einer einhergehenden Abschaltung die an den Ausgangskreis angeschlossenen Verbraucher überprüfen und den fehlerhaften Verbraucher austauschen, so daß das Abschalten des betreffenden Ausgangskreises selbst: - und damit der Störfall - vermeidbar wird. Die Steuer- und Überwachungseinrichtung greift immer dann ein, wenn Betriebszustände auftreten, die einen vorgegebenen Schwellwert eine Betriebsvariablen überschreiten. Dabei ist im Sinne einer intelligenten Überwachung vorgesehen, jedem Ausgangskreis eine Sensorvorrichtung zuzuordnen. Jeder Ausgangskreis ist getrennt von anderen Ausgangskreisen schaltbar, so daß nur der unzulässige Betriebsparameter aufweisende Ausgangskreis abgeschaltet wird, während die anderen Ausgangskreise weiter betriebsbereit sind. Bei einer Maschinensteuerung können so die Sensoren an einem Sensorkreis, die Aktoren an einem getrennten Aktorenkreis und z. B. ein Not-AUS an einem getrennten Notauskreis betrieben werden. Tritt im Aktorenkreis ein unzulässiger Betriebszustand auf, der zur Abschaltung führt, bleiben der Notkreis und auch der Sensorkreis weiter in Betrieb, so daß die Zentraleinheit der Maschinensteuerung weiterhin über den Zustand der Maschine informiert bleibt, was zum Wiederanfahren der Maschine vorteilhaft ist.

Die Aufteilung in mehrere voneinander unabhängig schaltbare und überwachte Ausgangskreise hat auch den Vorteil, daß die Steuer- und Überwachungseinrichtung die abgegriffenen Betriebsparameter verschiedener Ausgangskreise zur Auswertung miteinander vergleichen oder verknüpfen kann. Dadurch sind intelligente Überwachungsmethoden möglich, die eine Fehlererkennung auch bei z. B. symmetrisch belasteten Ausgangskreisen ohne großen Aufwand gewährleisten.

In besonderer Weiterbildung der Erfindung ist die Steuer- und Überwachungseinrichtung über einen Datenbus mit der Zentraleinheit der Maschinensteuerung verbunden. Vor Betätigen einer Mehrzahl von Aktoren kann der Steuer- und Überwachungseinheit, zum Beispiel das bevorstehende Einschalten dieser Verbraucher mitgeteilt werden, so daß die Steuer- und Überwachungseinheit einen entsprechenden Anstieg des Stroms im entsprechenden Ausgangskreis erwartet. Wird der erwartete Stromwert unterschritten, kann dies ein Hinweis auf einen ausgefallenen Aktor sein; wird der Stromwert überschritten, kann dies ein Hinweis auf einen fehlerhaften Aktor sein, der in Zukunft evtl. zu einem Kurzschluß führen kann. Das Ergebnis dieser Auswertung kann über eine optische oder akustische Anzeige am Netzgerät selbst signalisiert werden oder über den Datenbus der Zentraleinheit der Maschinensteuerung mitgeteilt werden, die dann entsprechende Warnmeldungen für den Benutzer generiert.

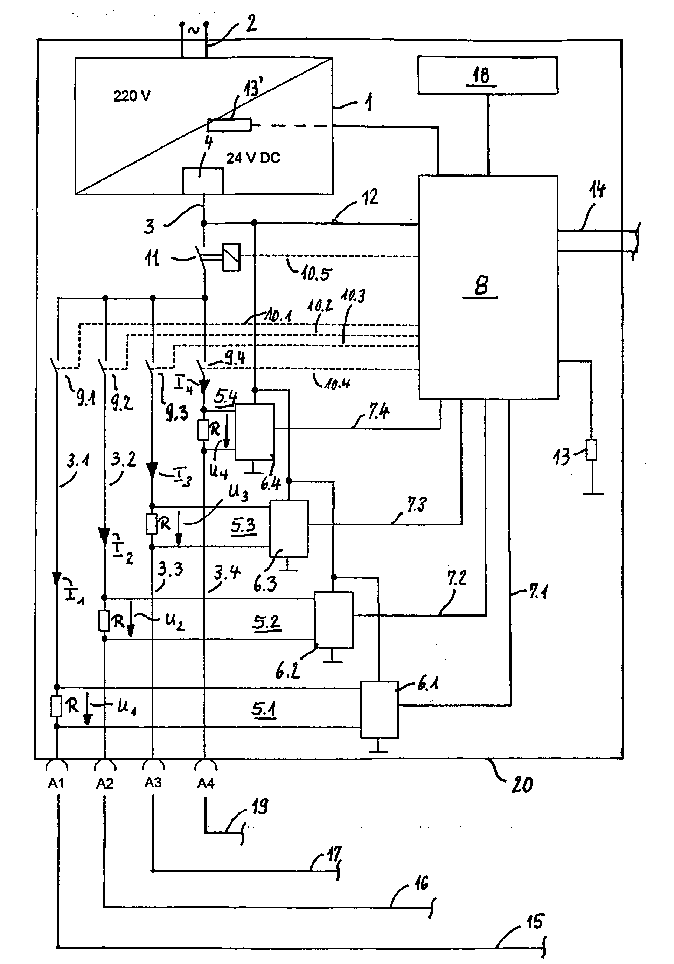

Weitere Merkmale der Erfindung ergeben sich aus den weiteren Ansprüchen, der Beschreibung und der Zeichnung, in der schematisch ein diagnosefähiges Netzgerät im Blockschaltbild dargestellt ist.

Das diagnosefähige Netzgerät besteht im wesentlichen aus einem Spannungsumsetzer, insbesondere einem Transformator 1, der einen Eingangskreis 2 mit einer Primärwicklung und einen Ausgangskreis 3 mit einer elektrisch getrennten Sekundärwicklung aufweist. Im gezeigten Ausführungsbeispiel wird der Eingangskreis 2 an ein Versorgungsnetz von zum Beispiel 220 V angeschlossen; über die Sekundärwicklung wird die Spannung auf eine Sekundärspannung von zum Beispiel 24 V transformiert. Im gezeigten Transformator 1 ist im Ausgangskreis 3 eine Gleichrichterstufe 4 vorgesehen, welche eine elektronische Spannungs- und/oder Stromstabilisierung aufweisen kann.

Der Ausgangskreis 3 ist im gezeigten Ausführungsbeispiel in voneinander unabhängige Ausgangskreise 3.1, 3.2, 3.3 und 3.4 aufgeteilt, wobei in jedem einzelnen Ausgangskreis 3.1, 3.2, 3.3 und 3.4 eine Sensoreinrichtung 5.1, 5.2, 5.3 und 5.4 angeordnet ist, um zumindest eine Betriebsvariable des jeweiligen Ausgangskreises 3.1, 3.2, 3.3 und 3.4 abzugreifen. Im gezeigten Ausführungsbeispiel wird der im Ausgangskreis fließende Strom I1, I2, I3 und I4 als Betriebsvariable über einen Shunt-Widerstand R abgegriffen. Die über den Shunt-Widerstand R abfallende Spannung U1, U2, U3 und U4 wird einem Verstärker 6.1, 6.2, 6.3 und 6.4 zugeführt, der das verstärkte Ausgangssignal über eine Signalleitung 7.1, 7.2, 7.3 und 7.4 einer Steuer- und Überwachungseinrichtung 8 zuführt.

Die Verstärker 6.1, 6.2, 6.3 und 6.4 sind zur Spannungsversorgung unmittelbar an den Ausgang 3 des Transformators 1 angeschlossen.

In jedem Ausgangskreis 3.1, 3.2, 3.3 und 3.4 ist ein elektrischer oder mechanischer Schalter 9.1, 9.2, 9.3 und 9.4 vorgesehen, der den jeweiligen Ausgangskreis 3.1, 3.2, 3.3 und 3.4 ein- oder ausschaltet. Der Schalter 9.1, 9.2, 9.3 und 9.4 kann als Halbleiterelement vorgesehen sein (z. B. Thyristor) oder als mechanischer Schalter (Schaltrelais). Die Schalter 9.1, 9.2, 9.3 und 9.4 sind über Steuerleitungen 10.1, 10.2, 10.3 und 10.4 von der Steuer- und Überwachungseinrichtung 8 betätigt. In der Verbindung zwischen dem Ausgang 3 der Sekundärwicklung und den Ausgangskreisen 3.1, 3.2, 3.3 und 3.4 ist ein Zentralschalter 11 vorgesehen, über den alle Ausgangskreise 3.1, 3.2, 3.3 und 3.4 gemeinschaftlich abschaltbar sind. Der Schalter 11 ist über eine Steuerleitung 10.5 von der Steuer- und Überwachungseinrichtung 8 betätigt. Im gezeigten Ausführungsbeispiel ist der Schalter 11 als Schütz ausgebildet; es kann zweckmäßig sein, den Schalter als Thyristor oder dgl. Halbleiterbauelement auszubilden.

Die Spannung am Ausgang 3 wird über einen Spannungsanschluß 12 ebenfalls von der Steuer- und Überwachungseinrichtung 8 überprüft, um z. B. eine Unterspannungserkennung durchzuführen. Gleichzeitig wird über den Spannungsanschluß 12 die Steuer- und Überwachungseinrichtung 8 mit der zum Betrieb notwendigen Energie versorgt.

Die Steuer- und Überwachungseinrichtung 8 tritt ferner mit einem Temperatursensor 13 bzw. 13' in Verbindung, der eine für das Netzgerät bzw. die Steuer- und Überwachungseinrichtung 8 kritische Temperatur überwacht. So kann der Temperatursensor 13 die Gehäuseinnentemperatur erfassen; zweckmäßig ist ein Temperatursensor 13' im Transformator 1 angeordnet, um die Betriebstemperatur der Primärspule und/oder Sekundärspule des Transformators 1 zu überwachen. Die Gesamtanordnung ist in einem gemeinsamen Gehäuse 20 aufgenommen, d. h. sowohl der Spannungsumsetzer 1 als auch die Steuer- und Überwachungseinrichtung 8 sowie die Sensoreinrichtungen 6.1, 6.2, 6.3 und 6.4 und die ihnen zugeordneten Sensoren wie z. B. Shunt-Widerstände R sind vom Gehäuse 20 umgeben.

Es kann zweckmäßig sein, in dem Gehäuse eine Anzeigeeinheit 18 anzuordnen, über die die Steuer- und Überwachungseinrichtung 8 die Betriebszustände der einzelnen Ausgangskreise 3.1, 3.2, 3.3 und 3.4 anzeigt sowie Warnmeldungen oder dgl. optisch oder akustisch mitteilt. In besonderer Ausgestaltung der Erfindung ist die Steuer- und Überwachungseinrichtung 8 über einen Datenbus 14 z. B. mit der Zentraleinheit einer Maschinensteuerung verbunden, deren einzelne Sensoren, Aktoren oder dgl. Bauelemente und Baugruppen über die Ausgangskreise 3.1, 3.2, 3.3 und 3.4 mit Leistung versorgt sind. Hierzu weist das Gehäuse 20 Anschlüsse A1, A2, A3 und A4 auf, über welche einzelne Betriebskreise der Maschinensteuerung versorgt sind. So kann an dem Anschluß A1 des Ausgangskreises 3.1 ein Sensorkreis 15 angeschlossen sein, über den z. B. alle Sensoren der Maschinensteuerung mit Spannung versorgt sind. In entsprechender Weise kann über den Anschluß A2 des Ausgangskreises 3.2 ein Aktorenkreis 16 mit Betriebsspannung versorgt werden, während an dem Anschluß A3 des Ausgangskreises 3.3 eine Notschaltung 17 wie z. B. ein Not-AUS angeschlossen sein kann. An den Anschluß A4 des Ausgangskreises 3.4 kann ein weiterer Verbraucherkreis 19 angeschlossen sein, der in geeigneter Weise ausgebildet ist.

Die Gesamtausgangsleistung des Transformators 1 von mehreren Ampere kann in eine Vielzahl von Ausgangskreisen 3 mit vorgebbaren Maximalströmen aufgeteilt werden; im Ausführungsbeispiel sind vier Ausgangskreise 3.1, 3.2, 3.3 und 3.4 dargestellt. Dabei kann in den Ausgangskreisen ein unterschiedlicher Strom I1, I2, I3 und I4 zugelassen werden, je nachdem welche Verbraucher an den jeweiligen Ausgangskreisen angeschlossen sind. So kann in dem Aktorenkreis 16 ein höherer Strom zugelassen sein als in dem Sensorenkreis 15. Bereits kleinere Stromschwankungen im Sensorenkreis 15 können dabei auf einen Fehler im System hinweisen, während in dem Aktorenkreis derartige kleine Stromschwankungen unerheblich sein können. Dies kann von der Steuer- und Überwachungseinrichtung 8 getrennt festgestellt und bewertet werden. Insbesondere ist mit der gezeigten Steuer- und Überwachungseinrichtung nicht nur der Ist-Zustand in dem jeweiligen Ausgangskreis auf unzulässige Betriebszustände zu überwachen, sondern es kann auch eine Trendanalyse der erfaßten Daten, z. B. der Betriebsvariablen I vorgenommen werden, so daß auch ein schleichend anwachsender Strom zuverlässig erkannt und ein Fehler diagnostiziert werden kann. So kann der bevorstehende Ausfall eines Ausgangskreises 3.1, 3.2, 3.3 oder 3.4 zeitlich bereits vor einem akuten Ausfall angezeigt werden, so daß der Benutzer rechtzeitig Gegenmaßnahmen ergreifen und einen Ausfall des Ausgangskreises unterbinden kann. Dabei kann die Steuer- und Überwachungseinrichtung 8 sowohl die Betriebszustände anzeigen oder aber auch selbst aktiv in den Ausgangskreis eingreifen, um z. B. bei unzulässigen Betriebszuständen den jeweiligen Kreis abzuschalten. Da die Ausgangskreise 3.1, 3.2 , 3.3 und 3.4 parallel betrieben werden, kann jeder Ausgangskreis ohne Rückwirkungen auf die anderen Ausgangskreise abgeschaltet werden. Dies bedeutet, daß z. B. der Aktorenkreis 16 bzw. der Ausgangskreis 3.2 durch Betätigen des Schalters 9.2 abgeschaltet werden kann, dennoch aber der Notkreis 17 und insbesondere der Sensorkreis 15 weiter betrieben werden können, so daß eine zentrale Maschinensteuerung weiterhin eine zuverlässige Überwachung der Maschinenanlage gewährleisten kann. Die Verbindung der Steuer- und Überwachungseinrichtung 8 über einen Datenbus 14 mit der Maschinensteuerung hat den Vorteil, daß z. B. aktuelle Betriebsdaten der Maschine selbst der Steuer- und Überwachungseinrichtung 8 mitgeteilt und in die Überwachung einbezogen werden kann. Bevor z. B. ein Reihe von Aktoren geschaltet werden, wird dies der Steuer- und Überwachungseinrichtung mitgeteilt, so daß ein entsprechendes Anwachsen des Stroms I2 im Ausgangskreis 3.2 als Reaktion gewertet werden kann. Die Steuer- und Überwachungseinrichtung 8 kann dadurch gleichzeitig die Funktion der Aktoren überwachen; korreliert z. B. der festgestellte Ist-Strom I2 nicht mit der von der Maschinensteuerung über den Datenbus 14 der Steuer- und Überwachungseinrichtung 8 mitgeteilten Anzahl von betätigten Aktoren, kann auf einen Fehler geschlossen werden. Ist z. B. der Strom zu hoch, ist einer der Aktoren fehlerhaft. Ist der festgestellte Strom zu niedrig, kann einer der Aktoren ausgefallen sein. Eine sprunghafte unzulässige Stromentnahme am Ausgang 3 kann über den Schalter 9 des Schützes durch Trennen aller Ausgangskreise 3.1, 3.2, 3.3 und 3.4 vom Ausgang 3 unterbunden werden.

Bei einer symmetrischen Belastung der Ausgangskreise 3.1, 3.2, 3.3 und 3.4 können auch die erfaßten Ist-Ströme I1 I2, I3 und I4 in der Steuer- und Überwachungseinrichtung 8 miteinander verglichen werden, da alle Sensoreinrichtungen 6.1, 6.2, 6.3 und 6.4 mit der gemeinsamen Steuer- und Überwachungseinrichtung 8 verbunden sind. Auch ist eine Verknüpfung der jeweiligen Stromwerte in Abhängigkeit von der Beschaltung der Ausgangskreise mit Verbrauchern möglich.

Zu hohe Betriebstemperaturen können dabei ebenfalls in entsprechender Weise zur Abschaltung einzelner Ausgangskreise oder aber aller Ausgangskreise über den Zentralschalter 11 führen.

## Patentansprüche

1. Netzgerät zur Leistungsversorgung einer Vielzahl von elektrischen Verbrauchern, insbesondere einer Maschinensteuerung, mit Sensoren und Aktoren, wobei das Netzgerät einen Eingangskreis (2) zur Verbindung mit einer Spannungsquelle und mehrere Ausgangskreise (3) zur Verbindung mit Verbrauchern aufweist, und mit einer Schutzschaltung zur Abschaltung des Ausgangskreises (3) bei unzulässigen Betriebszuständen, wobei eine Sensoreinrichtung (5.1, 5.2, 5.3, 5.4) zum Abgriff einer Betriebsvariablen (I1, I2, I3, I4) im Ausgangskreis (3.1, 3.2, 3.3, 3.4) vorgesehen ist, und die Sensoreinrichtung (5.1, 5.2, 5.3, 5.4) mit einer Steuer- und Überwachungseinrichtung (8) verbunden ist, welche die Ausgangssignale der Sensoreinrichtung (5.1, 5.2, 5.3, 5.4) verarbeitet und den Ausgangskreis (3.1, 3.2, 3.3, 3.4) bei Erfassung einer unzulässigen Betriebsvariablen (I1, I2, I3, I4) abschaltet, **dadurch gekennzeichnet, daß** mehrere Ausgangskreise (3.1, 3.2, 3.3, 3.4) vorgesehen sind und jedem Ausgangskreis (3.1, 3.2, 3.3, 3.4) eine Sensoreinrichtung (5.1, 5.2, 5.3, 5.4) zugeordnet ist und die Ausgangssignale einer Sensoreinrichtung nach dem Ist-Zustand und/oder nach einer Trendanalyse verarbeitet werden und ein Ausgangskreis (3.1, 3.2, 3.3, 3.4)bei einem auftretenden oder zu erwartenden unzulässigen Betriebszustand getrennt von anderen Ausgangskreisen (3.1, 3.2, 3.3, 3.4) abschaltbar ist und der unzulässige Betriebszustand angezeigt wird.

2. Netzgerät nach Anspruch 1,
**dadurch gekennzeichnet, daß** die Ausgangskreise (3.1, 3.2, 3.3, 3.4) parallel betrieben sind.

3. Netzgerät nach Anspruch 1 oder 2,
**dadurch gekennzeichnet, daß** die Ausgangskreise (3.1, 3.2, 3.3, 3.4) über einen Zentralschalter (11) gemeinsam abschaltbar sind.

4. Netzgerät nach einem der Ansprüche 1 bis 3,
**dadurch gekennzeichnet, daß** die Sensoreinrichtungen (5.1, 5.2,5.3, 5.4) an eine gemeinsame Steuer- und Überwachungseinrichtung (8) angeschlossen sind.

5. Netzgerät nach einem der Ansprüche 1 bis 4,
**dadurch gekennzeichnet, daß** die Steuer- und Überwachungseinrichtung (8) die abgegriffenen Betriebsvariablen (I1, I2, I3, I4) verschiedener Ausgangskreise (3.1, 3.2, 3.3, 3.4) miteinander vergleicht und/oder zur Auswertung verknüpft.

6. Netzgerät nach einem der Ansprüche 1 bis 5,
**dadurch gekennzeichnet, daß** die Steuer- und Überwachungseinrichtung (8) über einen Datenbus (14) mit der Maschinensteuerung verbunden ist.

7. Netzgerät nach Anspruch 6,
**dadurch gekennzeichnet, daß** die Steuer- und Überwachungseinrichtung (8) über den Datenbus (14) empfangene Betriebsdaten der Maschinensteuerung bei der Verarbeitung der Betriebsvariablen (I1, I2, I3, I4) dies Ausgangskreises (3.1, 3.2, 3.3, 3.4) einbezieht,

8. Netzgerät nach einem der Ansprüche 1 bis 7,
**dadurch gekennzeichnet, daß** die Betriebsvariable (I1, I2, I3, I4) der im Ausgangskreis (3.1, 3.2, 3.3, 3.4) fließende Strom ist, der über einen Shunt-Widerstand (R) abgegriffen ist.

9. Netzgerät nach einem der Ansprüche 1 bis 8,
**dadurch gekennzeichnet, daß** das Netzgerät ein Netzteil (1) umfaßt und die Steuer- und Überwachungseinrichtung (8) mit einem insbesondere die Betriebstemperatur des Netzteils (1) erfassenden Temperatursensor (13.1) verbunden ist.

10. Netzgerät nach Anspruch 9,
**dadurch gekennzeichnet, daß** das Netzteil (1), die Sensoreinrichtung (5.1, 5.2, 5.3, 5.4) und die Steuer- und Überwachungseinrichtung (8) in einem gemeinsamen Gehäuse (20) angeordnet sind.

11. Netzgerät nach einem der Ansprüche 1 bis 10,
**dadurch gekennzeichnet, daß** die Aktoren, die Sensoren und ein Notauskreis mit jeweils einem Ausgangskreis (3.1, 3.2, 3.3, 3.4) verbunden sind.

## Claims

1. A power supply system for supplying power to a plurality of electrical consumers, in particular a plant control system, having sensors and actuators, the power supply system having an input circuit (2) to connect it to a voltage source and several output circuits (3) to connect it to consumers, and having a protective circuit for switching off the output circuit (3) in illegal operating states, a sensor device (5.1, 5.2, 5.3, 5.4) for measuring an operating variable (I1,I2,I3,I4) being provided in the output circuit (3.1, 3.2, 3.3, 3.4) and said sensor device (5.1, 5.2, 5.3, 5.4) being connected to a control and monitoring device (8) which processes the output signals from said sensor device (5.1, 5.2, 5.3, 5.4) and switches off the output circuit (3.1, 3.2, 3.3, 3.4) when it detects an illegal operating variable (I1, I2, I3, I4),
**characterised in that**
several output circuits (3.1, 3.2, 3.3, 3.4) are provided, a sensor device (5.1, 5.2, 5.3, 5.4) is assigned to each output circuit (3.1, 3.2, 3.3, 3.4), the output signals from a sensor device are processed according to the actual status and/or according to a trend analysis and, when an illegal operating state occurs or is expected to occur, one output circuit (3.1, 3.2, 3.3, 3.4) can be switched off independently of the other output circuits (3.1, 3.2, 3.3, 3.4) and the illegal operating state is displayed.

2. A power supply system in accordance with claim 1,
**characterised in that**
the output circuits (3.1, 3.2, 3.3, 3.4) are operated in parallel.

3. A power supply system in accordance with claim 1 or 2,
**characterised in that**
the output circuits (3.1, 3.2, 3.3, 3.4) can be switched off together by a central switch (11).

4. A power supply system in accordance with one of claims 1 to 3,
**characterised in that**
the sensor devices (5.1, 5.2, 5.3, 5.4) are linked to a common control and monitoring device (8).

5. A power supply system in accordance with one of claims 1 to 4,
**characterised in that**
the common control and monitoring device (8) compares and/or links for evaluation purposes the operating variables (I1,I2,I3,I4) measured at various output circuits (3.1, 3.2, 3.3; 3.4).

6. A power supply system in accordance with one of claims 1 to 5,
**characterised in that**
the common control and monitoring device (8) is connected to the plant control system by a data bus (14).

7. A power supply system in accordance with claim 6,
**characterised in that**
the common control and monitoring device (8) includes operating data from the plant control system received from the data bus (14) in the processing of the operating variables (I1, I2, I3, I4) of the output circuit (3.1, 3.2, 3.3, 3.4).

8. A power supply system in accordance with one of claims 1 to 7,
**characterised in that**
the operating variable (I1, I2, I3, I4) is the current flowing through the output circuit (3.1, 3.2, 3.3, 3.4) and is measured by means of a shunt resistor (R).

9. A power supply system in accordance with one of claims 1 to 8,
**characterised in that**
the power supply system comprises a power supply part (1) and the control and monitoring device (8) is connected to a temperature sensor (13.1) which measures the operating temperature of the power supply part (1) in particular.

10. A power supply system in accordance with claim 9,
**characterised in that**
the power supply part (1), the sensor device (5.1, 5.2, 5.3; 5.4) and the control and monitoring deice (8) are positioned in a common housing (20).

11. A power supply system in accordance with one of claims 1 to 10,
**characterised in that**
the actuators, the sensors and an emergency off circuit are each connected to one output circuit (3.1, 3.2, 3.3, 3.4).

## Revendications

1. Système d'alimentation pour l'alimentation en puissance d'une pluralité de consommateurs électriques, notamment d'un système de commande de machines avec des capteurs et des actionneurs, le système d'alimentation comportant un circuit d'entrée (2) destiné à être relié à une source de tension et plusieurs circuits de sortie (3) destinés à être reliés à des consommateurs, et avec un circuit protecteur pour déconnecter le circuit de sortie (3) dans le cas d'états de service inadmissibles, un dispositif de capteurs (5.1, 5.2, 5. 3, 5.4) étant prévu pour mesurer une variable de service (I1, I2, I3, I4) dans le circuit de sortie (3.1, 3.2, 3.3, 3.4), et le dispositif de capteurs (5.1, 5.2, 5.3, 5.4) étant relié à un dispositif de commande et de surveillance (8) qui traite les signaux de sortie du dispositif de capteurs (5.1, 5.2, 5.3, 5.4) et qui déconnecte le circuit de sortie (3.1, 3.2, 3.3, 3.4) lors de la détection d'une variable de service inadmissible (I1, I2, I3, I4),
**caractérisé en ce qu'**on a prévu plusieurs circuits de sortie (3.1, 3.2, 3.3, 3.4) et **en ce qu'**un dispositif de capteurs (5.1, 5.2, 5.3, 5.4) est associé à chaque circuit de sortie (3.1, 3.2, 3.3', 3.4) et **en ce que** les signaux de sortie d'un dispositif de capteurs sont traités en fonction de l'état réel et/ou d'une analyse des tendances et **en ce qu'**à la production ou lors de l'attente d'un état de service inadmissible, un circuit de sortie (3.1, 3.2, 3.3, 3.4) peut être déconnecté séparément d'autres circuits de sortie et **en ce que** l'état de service inadmissible est affiché.

2. Système d'alimentation selon la revendication 1,
**caractérisé en ce que** les circuits de sortie (3.1, 3.2, 3.3, 3.4) sont exploités en parallèle.

3. Système d'alimentation selon la revendication 1 ou 2,
**caractérisé en ce que** les circuits de sortie (3.1, 3.2, 3.3, 3.4) peuvent être déconnectés en commun par l'intermédiaire d'un interrupteur centralisé (11).

4. Système d'alimentation selon l'une quelconque des revendications 1 à 3,
**caractérisé en ce que** les dispositifs de capteurs (5.1, 5.2, 5.3, 5.4) sont branchés sur un dispositif de commande et de surveillance commun (8).

5. Système d'alimentation selon l'une quelconque des revendications 1 à 4,
**caractérisé en ce que** le dispositif de commande et de surveillance (8) compare entre elles les variables mesurées (I1, I2, I3, I4) dans différents circuits de sortie (3.1, 3.2, 3.3, 3.4) et/ou les combine pour les évaluer.

6. Système d'alimentation selon l'une quelconque des revendications 1 à 5,
**caractérisé en ce que** le dispositif de commande et de surveillance (8) est relié via un bus de données (14) avec le système de commande de la machine.

7. Système d'alimentation selon la revendication 6,
**caractérisé en ce que** le dispositif de commande et de surveillance (8) implique des données d'exploitation du système de commande de la machine réceptionnées via le bus de données (14) lors du traitement des variables d'exploitation (I1, I2, I3, I4) du circuit de sortie (3.1, 3.2, 3.3, 3.4).

8. Système d'alimentation selon l'une quelconque des revendications 1 à 7,
**caractérisé en ce que** la variable d'exploitation (I1, I2, I3, I4) est le courant circulant dans le circuit de sortie (3.1, 3.2, 3.3, 3.4), qui est prélevé via une résistance en dérivation (R).

9. Système d'alimentation selon l'une quelconque des revendications 1 à 8,
**caractérisé en ce que** le système d'alimentation comprend le bloc d'alimentation (1) et **en ce que** le dispositif de commande et de surveillance (8) est relié avec une sonde de température (13.1) détectant notamment la température de service du bloc d'alimentation (1).

10. Système d'alimentation selon la revendication 9,
**caractérisé en ce que** le bloc d'alimentation (1), le dispositif de capteurs (5.1, 5.2, 5.3, 5.4) et le dispositif de commande et de surveillance (8) sont disposés dans un boîtier commun (20).

11. Système d'alimentation selon l'une quelconque des revendications 1 à 10,
**caractérisé en ce que** les actionneurs, les capteurs et un circuit d'arrêt d'urgence sont reliés chacun à un circuit de sortie (3.1, 3.2, 3.3, 3.4).
